# EUROPEAN PATENT SPECIFICATION

(11) **EP 3 316 555 B1**
(45) Date of publication and mention of the grant of the patent: **11.11.2020**
(21) Application number: 16817196.5
(22) Date of filing: 23.06.2016
(51) Int. Cl.: H04L 29/12, H04L 12/933, H04L 29/08, H04L 12/947

(54) **MAC ADDRESS SYNCHRONIZATION METHOD, DEVICE AND SYSTEM**
MAC-ADRESSSYNCHRONISATIONSVERFAHREN, VORRICHTUNG UND SYSTEM
PROCÉDÉ, DISPOSITIF ET SYSTÈME DE SYNCHRONISATION D'ADRESSE MAC

(30) Priority: 29.06.2015 CN 201510369575
(43) Date of publication of application: 02.05.2018
(73) Proprietor: ZTE Corporation, Shenzhen, Guangdong 518057 (CN)
(72) Inventor: PAN, Tingshan, Shenzhen Guangdong 518057 (CN)
(74) Representative: Nordmeyer, Philipp Werner
(86) International application number: PCT/CN2016/086930
(87) International publication number: WO 2017/000832

(56) References cited:
- CN-A- 103 929 461
- CN-A- 103 929 461
- CN-A- 104 410 527
- US-A1- 2014 247 829

## Description

### TECHNICAL FIELD

The present disclosure relates to, but is not limited to, the field of data communication network technology, and especially to a media access control (MAC) address synchronization method, a MAC address synchronization device and a MAC address synchronization system.

### BACKGROUND

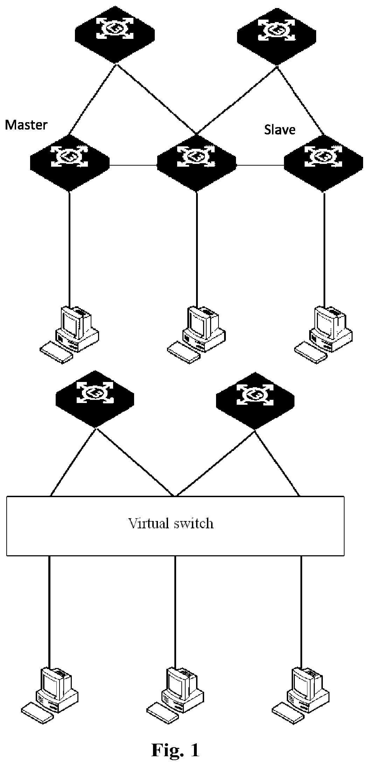

Stacking is a technique in which multiple stackable switches are combined together and act as a single switch logically. Fig. 1 is a schematic diagram illustrating stack ports of three switches being connected and forming a single switch according to existing arts. As shown in Fig. 1, stacking is a virtualization technology that virtualizes multiple devices in a same layer of a network into a single logical device without changing the physical topology of the network. This simplifies network structure and network protocol deployment and improves network reliability and manageability.

Stacking has mainly the following advantages:
1. High reliability. 1: N redundant backup can be realized among member devices in a stacking system. Stacking supports cross-device link aggregation function to implement link redundancy backup across devices.
2. Strong network scalability. By adding a member device(s), the number of ports, bandwidth and processing capacity of the stacking system can be easily expanded.
3. Simplified network structure and protocol deployment. Stacking technology can simplify a complex network topology into a structured, simply inter-connected network structure, in which loops can be naturally eliminated by link aggregation in each layer of the network and the need to deploy protocols such as Multiple Spanning Tree Protocol (MSTP) and Virtual Router Redundancy Protocol (VRRP) is also eliminated.
4. Simplified configuration and management. After a stack in which multiple physical devices are virtualized as a single device is formed, a user can log in to the stacking system through any member device to uniformly configure and manage all the member devices in the stacking system.

All individual devices in a stacking system are called member devices, and can be categorized into three categories according to their functions:
1. Master switch (i.e., Master), which manages the stacking system and there is only one master switch in the stacking system.
2. Standby switch (i.e., Standby), which functions as a backup switch of the master switch and provides all the services provided by the master switch once the master switch fails. There is only one standby switch in the stacking system.
3. Slave switch (i.e., Slave). Except for the master switch, the other switches in the stacking system are all slave switches. It is to be noted that the standby switch functions as both of the master switch and the slave switch.

Stack ID (i.e., member ID) is configured to identify and manage the member devices. Each member device in the stacking system has a unique stack ID.

Stack priority is an attribute of the member device. It is mainly used for determining a role of the member device in a role election. A larger value of the stack priority indicates a higher priority and a greater likelihood of being elected as the master switch.

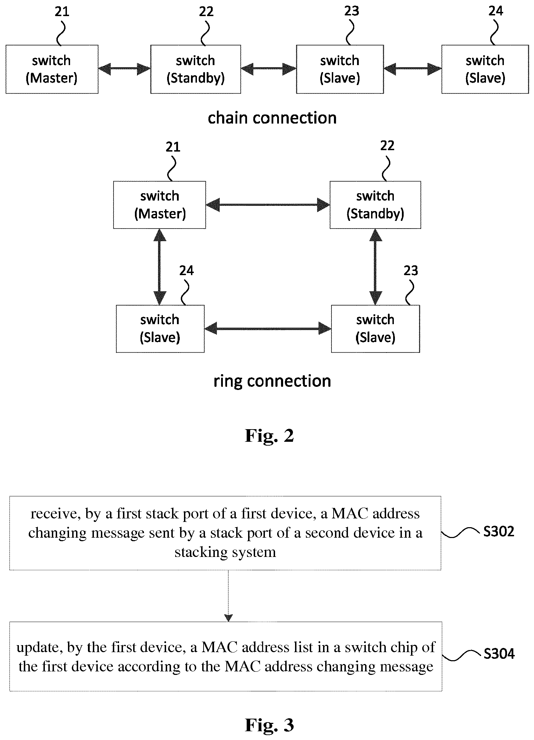

Fig. 2 is a schematic diagram illustrating topological connections in existing stacking technology. As shown in Fig. 2, there are two kinds of topological connections:
1) Chain connection: a stack cable is used for connecting a left (right) port of a device to a right (left) port of another device, and so on in a similar fashion. The right (left) port of the first device and the left (right) port of the last device is not connected with any stack cable.
2) Ring connection: this configuration may be realized by connecting the right port (left port) of the first device to the left port (right port) of the last device.

The device includes a switch, such as any of switches 21 to 24 in Fig. 2.

A conventional MAC address synchronization method for switch devices in the stacking system includes the following steps of:
1) when a MAC address in a switch chip of a device (which may be a master device, a standby device, or a member device) in a stacking system is changed (e.g., a new MAC address is learned or an old MAC address is aged), sending, from the switch chip to a central processing unit (CPU) of the device, a MAC address changing message notifying the change of the MAC address (alternatively, the CPU of the device may periodically poll an address list in a switch chip of the device and then compare the polled address list with a list in software to obtain a MAC address changing message); and sending, from the CPU of the device, an address updating message (i.e., the MAC address changing message) to the master device (which in turn notifies other devices in the stacking system) or directly to the other devices in the stacking system to notify the change of the MAC address; and
2) upon receiving, by the other devices in the stacking system, an address changing message (that is, the MAC address changing message) sent by the CPU of the device, performing an address changing process. In this way, a MAC address(es) is (are) synchronized among devices in the stacking system.

The conventional MAC address synchronization method may have the following defects. If MAC addresses are quickly changed, CPUs of respective devices in which a MAC address(es) is (are) changed may need to send a large amount of messages to CPUs of other devices in the stacking system, and thus changes of the MAC address(es) may cause CPUs to be overloaded, thereby leading to a longer synchronization time for the MAC address among devices in the stacking system. Chinese patent application No. CN 103929461A discloses an MAC address information synchronization method and a device in a stacking system. The MAC address information synchronization method and device in the stacking system are applied to member devices in the stacking system. A CPU judges whether source port information in a new MAC message is used for a local user service port when receiving the MAC message sent by a forwarding chip, generates a corresponding MAC address table item and configures the item to an FDB according to a source

MAC address, a VLAN ID and source port information in the MAC message, generates an MAC address synchronization message and broadcasts the MAC address synchronization message to other member devices in the stacking system if the source port information in the new MAC message is used for the local user service port; the CPU generates and configures a corresponding MAC address table item to the FDB according to the source MAC address, the VLAN ID and the source port information in the MAC message if the source port information in the new MAC message is not used for the local user service port.

U.S. patent application No. US 2014/0247829A1 discloses a method including learning a media access control (MAC) address at a first switch in a multi-switch architecture; storing the MAC address in a forwarding database of the first switch; transmitting a data frame to one or more switches in the multi-switch architecture via inter-switch connectivity between the first switch and the one or more switches, wherein the data frame is created to enable the one or more switches to learn the MAC address therefrom; learning the MAC address from the data frame at the one or more switches; and storing the MAC address in a forwarding database for each of the one or more switches.

It can be seen from the above that, in existing art, the stacking system may suffer from slow synchronization of MAC address and heavy CPU load.

### SUMMARY

The invention is defined by a MAC address synchronization method for a stacking system according to claim 1, a MAC address synchronization device according to claim 2 and a computer-readable storage medium according to claim 4. Further embodiments are defined by the dependent claims.

### BRIEF DESCRIPTION OF DRAWINGS

Fig. 1 is a schematic diagram illustrating stack ports of three switches being connected and forming a single switch according to existing arts.
Fig. 2 is a schematic diagram illustrating topological connections in existing stacking systems.
Fig. 3 is a flowchart illustrating a MAC address synchronization method in accordance with an embodiment of the present disclosure.
Fig. 4 is a flowchart illustrating a MAC address synchronization method in accordance with another embodiment of the present disclosure.
Fig. 5 is a block diagram illustrating a MAC address synchronization device in accordance with an embodiment of the present disclosure.
Fig. 6 is a block diagram illustrating a MAC address synchronization device in accordance with another embodiment of the present disclosure.
Fig. 7 is a block diagram illustrating a MAC address synchronization system in accordance with an embodiment of the present disclosure.
Fig. 8 is a flowchart illustrating a MAC address synchronization method in accordance with yet another embodiment of the present disclosure.

### DETAILED DESCRIPTION

Implementations of the present disclosure will be described below with reference to the accompanying drawings. It is to be noted that embodiments and features in the embodiments described in the present disclosure can be combined with each other in arbitrary manners, unless a conflict exists.

It should be noted that the terms "first", "second" and the like as used herein and in the claims as well as in the accompanying drawings are used to distinguish similar elements contained therein, rather than describing a specific order or sequence.

Embodiments of the present disclosure provide a media access control (MAC) address synchronization method. Fig. 3 is a flowchart illustrating a MAC address synchronization method in accordance with an embodiment of the present disclosure. As shown in Fig. 3, the method may include the following step S302 and step S304.

At step S302, a first stack port of a first device receives a MAC address changing message sent by a stack port of a second device in a stacking system.

At step S304, the first device updates a MAC address list in a switch chip of the first device according to the MAC address changing message.

With the above steps, the first stack port of the first device receives the MAC address changing message sent by the stack port of the second device in the stacking system; and the first device updates the MAC address list in the switch chip of the first device according to the MAC address changing message. That is, the first device transmits the MAC address changing message through its own stack port, without the need of interaction between CPUs of the two devices to implement transmission of the MAC address changing message. In this way, CPU resources can be saved, while the problem of slow synchronization of MAC address and heavy CPU load in the existing stacking system can also be solved, thereby improving the speed of MAC address synchronization.

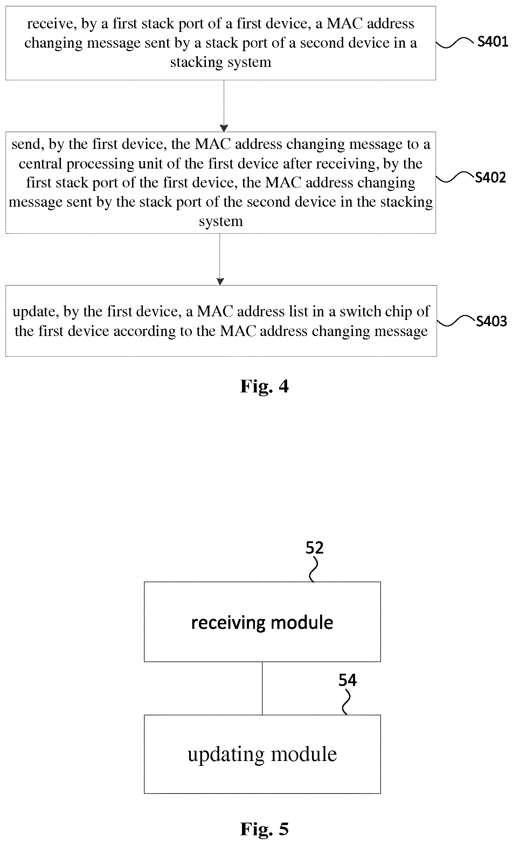

Embodiments of the present disclosure further provide a media access control (MAC) address synchronization method. Fig. 4 is a flowchart illustrating a MAC address synchronization method in accordance with another embodiment of the present disclosure. As shown in Fig. 4, the above-described method with reference to Fig. 3 may further include step S402. At step S402, after the first stack port of the first device receives the MAC address changing message sent by the stack port of the second device in the stacking system, the first device sends the MAC address changing message to a central processing unit (CPU) of the first device.

It is to be understood that the MAC address changing message may be sent by the first device to the CPU of the first device in several ways. In one embodiment, a MAC address changing message may be copied by setting up an Access Control List (ACL), and then the copied MAC address changing message may be uploaded to the CPU of the first device, but the present disclosure is not limited thereto. The MAC address changing message may be uploaded directly to the CPU of the first device in other ways.

In some embodiments of the present disclosure, the process of the first device updating the MAC address list in the switch chip of the first device according to the MAC address changing message may include: the CPU of the first device updates the MAC address list in the switch chip of the first device according to the MAC address changing message.

With the abovementioned method, the first device sends the MAC address changing message to the CPU of the first device after receiving the MAC address changing message through its own the stack port and the CPU of the first device is configured to update the MAC address list and does not need to send the MAC address changing message, thereby saving CPU resources and improving the updating speed of the MAC address.

In some embodiments of the present disclosure, the MAC address changing message may carry a specific identifier, and the specific identifier may be configured to identify the MAC address changing message.

In some embodiments of the present disclosure, the specific identifier may be an updating flag bit set in a control header in front of a message header of the MAC address changing message.

Through the specific identifier, a stack port can identify a MAC address changing message according to the updating flag bit, and determine whether the MAC address changing message is received or not.

With the descriptions of the above implementations of the present disclosure, those skilled in the art can clearly understand that any of the methods according to the foregoing embodiments may be implemented by means of software plus a necessary general-purpose hardware platform, and certainly may also be implemented by hardware. In one embodiment, a computer-readable storage medium (such as ROM, RAM, magnetic disk, and optical disk) may be provided. The computer-readable storage medium may include one or more instructions, which when being executed, cause a terminal device (which may be a mobile phone, a computer, a server, or a network device) to perform any of the methods according to the embodiments of the present invention.

Embodiments of the present disclosure further provide a media access control (MAC) address synchronization device configured to implement any of the foregoing embodiments, details of which are omitted here to avoid redundant descriptions. As used in the following, the term "module" may include a combination of software and/or hardware for realizing predetermined functions. Although the devices described in the following embodiments may be implemented in software, it is also possible and conceivable to implement the devices in hardware or a combination of software and hardware.

Fig. 5 is a block diagram illustrating a MAC address synchronization device in accordance with an embodiment of the present disclosure. As shown in Fig. 5, the device may be applied to a first device in a stacking system and may include a receiving module 52 and an updating module 54.

The receiving module 52 may be configured to receive, at a first stack port of the first device, a MAC address changing message sent by a stack port of a second device in the stacking system.

In some embodiments of the present disclosure, the receiving module 52 may be further configured to receive a MAC address changing message sent by a switch chip of the first device.

The updating module 54 may be configured to update a MAC address list in the switch chip of the first device according to the MAC address changing message.

With the above device, the first stack port of the first device receives the MAC address changing message sent by the stack port of the second device in the stacking system; and the first device updates a MAC address list in the switch chip of the first device according to the MAC address changing message. That is, the first device transmits the MAC address changing message through its own stack port, without the need of interaction between CPUs of the two devices to implement transmission of the MAC address changing message. In this way, CPU resources can be saved, while the problem of slow synchronization of MAC address and heavy CPU load in the existing stacking system can also be solved, thereby improving the speed of MAC address synchronization.

In some embodiments of the present disclosure, the receiving module 52 may be further configured to receive a MAC address changing message sent by the switch chip of the first device.

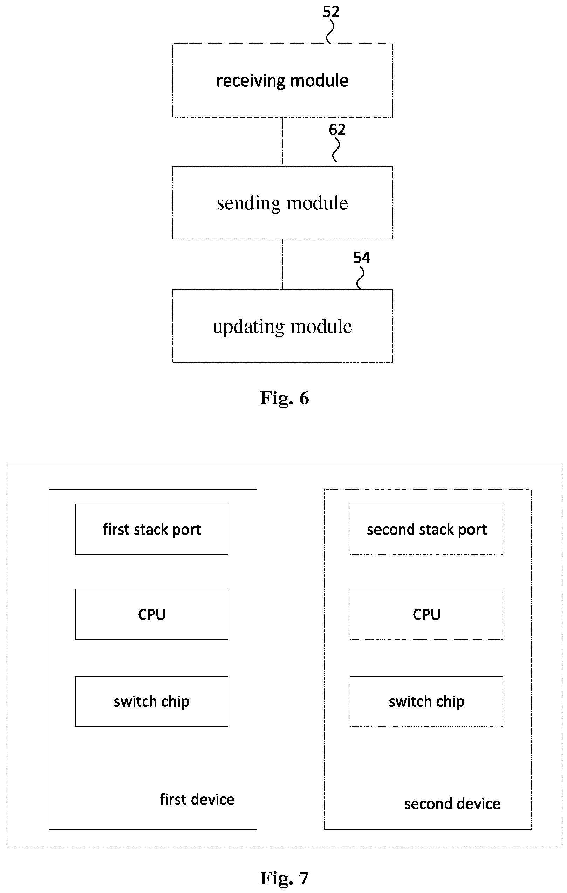

Embodiments of the present disclosure further provide a media access control (MAC) address synchronization device. Fig. 6 is a block diagram illustrating a MAC address synchronization device in accordance with another embodiment of the present invention. As shown in Fig. 6, the device may further include a sending module 62 in addition to the modules illustrated in Fig. 5. The sending module 62 may be configured to send a MAC address changing message to a central processing unit (CPU) of the first device, after the receiving module 52 receives, at the first stack port of the first device, the MAC address changing message sent by the stack port of the second device in the stacking system.

In embodiments of the present disclosure, the MAC address changing message may be sent by the first device to the CPU of the first device in several ways. In one embodiment, a MAC address changing message may be copied by setting up an Access Control List (ACL), and then the copied MAC address changing message may be uploaded to the CPU of the first device, but the present disclosure is not limited thereto. The MAC address changing message may be uploaded directly to the CPU of the first device in other ways.

In some embodiments of the present disclosure, the MAC address changing message may carry a specific identifier, and the specific identifier may be configured to identify the MAC address changing message.

In some embodiments of the present disclosure, the specific identifier may be an updating flag bit set in a control header in front of a message header of the MAC address changing message.

Through the specific identifier, a stack port can identify a MAC address changing message according to the updating flag bit, and determine whether the MAC address changing message is received or not.

It should be noted that each of the foregoing modules may be implemented by software or hardware, and the latter may be implemented by, but not limited to, the following configuration: the modules all being implemented in a single processor; or the modules being implemented in multiple processors respectively.

Embodiments of the present disclosure further provide a media access control (MAC) address synchronization system. Fig. 7 is a block diagram illustrating a MAC address synchronization system in accordance with an embodiment of the present disclosure. As shown in Fig. 7, the system may include a first device and a second device. The first device may include a first stack port, a switch chip, and a central processing unit (CPU). The second device may include a second stack port, a switch chip, and a CPU. In a case where a MAC address in the first device is changed, the switch chip of the first device may send a MAC address changing message to the CPU of the first device and to the second stack port of the second device. After receiving the MAC address changing message, the second stack port of the second device may upload the MAC address changing message to the CPU of the second device. The CPU of the second device may update a MAC address list in the switch chip of the second device according to the MAC address changing message.

With the above system, the first stack port of the first device sends the MAC address changing message to the second stack port of the second device in the stacking system; and the first device updates a MAC address list in the switch chip of the first device according to the MAC address changing message. That is, the first device transmits the MAC address changing message through its own stack port, without the need of interaction between CPUs of the two devices to implement transmission of the MAC address changing message. In this way, CPU resources can be saved, while the problem of slow synchronization of MAC address and heavy CPU load in the existing stacking system can also be solved, thereby improving the speed of MAC address synchronization.

The above implementations are to be explained in detail in combination with examples of practical applications.

The present disclosure provides an application case, in which: when a MAC address in any device in a stacking system is changed, a switch chip (which is not a CPU but a switch chip such as switch chips available from Broadcom or Marvell) may trigger sending of a MAC address changing message to a local CPU and all stack ports (2 at maximum quantity) of the device. After the MAC address changing message arrives at a stack port of another device, the other device may upload a copy of the MAC address changing message to its own CPU, and the MAC address changing message continues to be transmitted to a farther device through other stack port(s) of the other device.

All devices in a chain-stacking system or ring-stacking system would be able to receive a message indicating a change on MAC address. Each device handles by itself the MAC address changing message sent by its own switch chip and completes the change on the MAC address. There is no need for any messages to be communicated between CPUs of the devices. This allows fast synchronization of MAC addresses within the stacking system and saves CPU resources.

In an application case of a MAC address synchronization method in a stacking system implemented by one embodiment of the present disclosure, the following step A and step B may be included.

At step A, when a MAC address in any device in a ring-stacking system or chain-stacking system is changed, a switch chip of the device triggers sending of a MAC address changing message to a CPU and a stack port(s) of the device.

At step B, each device receives, at its own stack port, the MAC address changing message, and then the received MAC address changing message is copied and the copy is sent to a local CPU. Meanwhile, the MAC address changing message is sent to a farther device(s) through other possible stack port(s).

At step B, each device processes the MAC address changing message sent from its own switch chip or stack port and completes the change on the MAC address, thereby realizing fast synchronization of MAC address in the stacking system.

Compared with existing technologies, this application case introduces a method and system for quick synchronization of MAC address in a stacking system, which can solve the problem of slow synchronization of MAC address in the existing stacking system. Therefore, CPU load can be reduced and the overall performance of the stacking system can be improved.

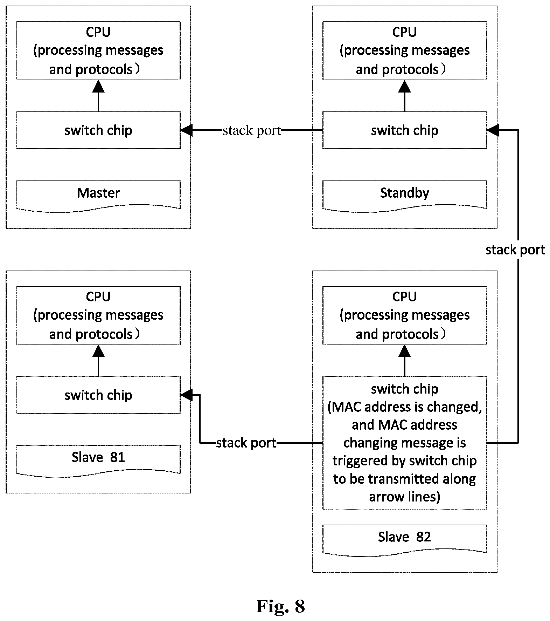

Embodiments of the present disclosure further provide a MAC address synchronization method. Fig. 8 is a flowchart illustrating a MAC address synchronization method in accordance with yet another embodiment of the present disclosure. As shown in Fig. 8, four devices are connected through respective stack ports and form a chain-connected stacking system. Assuming that a MAC address in a slave device 82 is changed, the implementation of the method in this embodiment may include the following steps 801 to 805.

At step 801, when a MAC address change occurs in a switch chip of the slave device 82, a MAC address changing message is immediately and automatically triggered to be sent to a CPU and two stack ports of the slave device 82. It is necessary for the MAC address changing message to have a specific identifier, so that the message can be identified by other devices. Generally, a control header may be added in front of a message header of the message by a stack port, as is the case with mainstream chip manufacturers, and thus a MAC updating flag (i.e., the updating flag bit, as described above) can be set in the control header.

At step 802, a slave device 81, which has only one stack port, determines, at the one stack port and according to the MAC updating flag in the control header of the message, that the MAC address changing message is received and then directly uploads the MAC address changing message to a CPU of the slave device 81 by setting an ACL or by other means.

At step 803, a stack port on the right side of a standby device determines, according to the MAC updating flag in the control header of the message, that the MAC address changing message is received and then uploads a copy of the MAC address changing message to a CPU of the standby device by setting an ACL or by other means, and also forwards the MAC address changing message to a stack port on the left side of the standby device.

At step 804, a master device determines, at a stack port of the master device and according to the MAC updating flag in the control header of the message, that the MAC address changing message is received. Since there is only one stack port, the MAC address changing message is directly upload to a CPU of the master device by setting an ACL or by other means.

At step 805, the CPU of the master device, the CPU of the standby device and the CPUs of the slave devices 81, 82 process the MAC address changing message respectively, and the CPU of the master device, the CPU of the standby device and the CPUs of the slave devices 81, 82 update the address lists in their local switch chips to implement MAC address synchronization in the stacking system.

Embodiments of the present disclosure further provide a storage medium. In some embodiments of the present disclosure, the abovementioned storage medium may be configured to store program code for performing the following step S1 and step S2.

At step S1, a first stack port of a first device receives a MAC address changing message sent by a stack port of a second device in a stacking system.

At step S2, the first device updates a MAC address list in a switch chip of the first device according to the MAC address changing message.

Those skilled in the art may understand that all or part of the steps in any of the foregoing methods may be implemented by a program instructing a corresponding hardware (for example, a processor), and the program may be stored in a computer-readable storage medium, such as a read-only memory, a magnetic disk, a optic disk and the like. Optionally, all or part of the steps of any of the above embodiments may also be implemented in one or more integrated circuits. Accordingly, the modules/units in any of the above embodiments may be implemented in hardware. For example, their functions may be realized by a corresponding integrated circuit(s), or may be implemented in software function modules. For example, their functions may be realized by a processor executing program instructions stored in a memory. This application is not limited to any particular combinations of hardware and software.

### Industrial Applicability

In implementations according to embodiments of the present disclosure, a first stack port of a first device receives a MAC address changing message sent by a stack port of a second device in a stacking system; and the first device updates a MAC address list in a switch chip of the first device according to the MAC address changing message. That is, the first device transmits the MAC address changing message through its own stack port, without the need of interaction between CPUs of the two devices to implement transmission of the MAC address changing message. In this way, CPU resources can be saved, while the problem of slow synchronization of MAC address and heavy CPU load in the existing stacking system can also be solved, thereby improving the speed of MAC address synchronization.

## Claims

1. A media access control, MAC, address synchronization method for a stacking system, comprising:
receiving (S302, S401), by a first stack port of a first device, a MAC address changing message from a second stack port of a second device in the stacking system; wherein the MAC address changing message carries a specific identifier configured to identify the MAC address changing message, and the specific identifier is an updating flag bit set in a control header in front of a message header of the MAC address changing message;
upon determining, according to the updating flag bit, that the MAC address changing message is received, uploading (S402), by the first stack port of the first device, a copy of the MAC address changing message to a first central processing unit, CPU, of the first device; and
updating (S304, S403), by the first CPU of the first device, a MAC address list in a first switch chip of the first device according to the MAC address changing message.

2. A media access control, MAC, address synchronization device adapted to be placed in a stacking system and comprising a first stack port, a first central processing unit, CPU, and a first switch chip, wherein the MAC address synchronization device is configured to perform the method of claim 1.

3. A media access control, MAC, address synchronization system, comprising a first device according to claim 2, and a second device comprising a second stack port, a second switch chip, and a second CPU; wherein
the second switch chip is configured to, in a case where a MAC address in the second device is changed, send the MAC address changing message to the first stack port of the first device and to the second CPU of the second device;
wherein the MAC address changing message carries a specific identifier configured to identify the MAC address changing message, and the specific identifier is an updating flag bit set in a control header in front of a message header of the MAC address changing message.

4. A computer-readable storage medium having computer-executable instructions stored therein, which when being executed by a media access control, MAC, address synchronization device, cause the MAC address synchronization device to perform the method according to claim 1.

## Patentansprüche

1. Ein Verfahren zum Synchronisieren von MAC-Adressen für ein Stacking-System, umfassend:
Empfangen (S302, S401) einer MAC-Adressänderungsnachricht von einem zweiten Stack-Port einer zweiten Vorrichtung in dem Stacking-System durch einen ersten Stack-Port einer ersten Vorrichtung; wobei die MAC-Adressänderungsnachricht eine spezifische Kennung trägt, die konfiguriert ist, um die MAC-Adressänderungsnachricht zu identifizieren, und die spezifische Kennung ein Aktualisierungs-Flag-Bit ist, das in einem Kontroll-Header vor einem Nachrichten-Header der MAC-Adressänderungsnachricht gesetzt ist;
beim Bestimmen gemäß dem Aktualisierungs-Flag-Bit, dass die MAC-Adressänderungsnachricht empfangen wird, Hochladen (S402) einer Kopie der MAC-Adressänderungsnachricht durch den ersten Stacking-Port der ersten Vorrichtung zu einer ersten Zentraleinheit, CPU, der ersten Vorrichtung; und
Aktualisierung (S304, S403), durch die erste CPU der ersten Vorrichtung, einer MAC-Adressenliste in einem ersten Switch-Chip der ersten Vorrichtung entsprechend der MAC-Adressänderungsnachricht.

2. Eine MAC-Adressensynchronisationsvorrichtung, die angepasst ist, um in einem Stacking-System angeordnet zu werden, und die einen ersten Stacking-Port, eine erste Zentraleinheit, CPU, und einen ersten Switch-Chip umfasst, wobei die MAC-Adressensynchronisationsvorrichtung konfiguriert ist, um das Verfahren gemäß Anspruch 1 durchzuführen.

3. Ein MAC-, Adressensynchronisationssystem mit einer ersten Vorrichtung gemäß Anspruch 2 und einer zweiten Vorrichtung mit einem zweiten Stack-Port, einem zweiten Switch-Chip und einer zweiten CPU, wobei die MAC-Adressensynchronisationsvorrichtung so konfiguriert ist, dass sie das Verfahren gemäß Anspruch 1 durchführt.
der zweite Switch-Chip so konfiguriert ist, dass er in einem Fall, in dem eine MAC-Adresse in der zweiten Vorrichtung geändert wird, die Nachricht zur Änderung der MAC-Adresse an den ersten Stack-Port der ersten Vorrichtung und an die zweite CPU der zweiten Vorrichtung sendet;
wobei die MAC-Adressänderungsnachricht eine spezifische Kennung trägt, der konfiguriert ist, um die MAC-Adressänderungsnachricht zu identifizieren, und die spezifische Kennung ein Aktualisierungs-Flag-Bit ist, das in einem Kontroll-Header vor einem Nachrichten-Header der MAC-Adressänderungsnachricht gesetzt ist.

4. Computerlesbares Speichermedium mit darin gespeicherten computerausführbaren Befehlen, die, wenn sie von einer MAC-Adressensynchronisationsvorrichtung ausgeführt werden, die MAC-Adressensynchronisationsvorrichtung veranlassen, das Verfahren gemäß Anspruch 1 durchzuführen.

## Revendications

1. Un procédé de synchronisation d'adresses MAC pour un système de stacking, comprenant :
la réception (S302, S401), par un premier port de stacking d'un premier dispositif, d'un message de changement d'adresse MAC provenant d'un deuxième port de stacking d'un deuxième dispositif dans le système de stacking; dans lequel le message de changement d'adresse MAC porte un identifiant spécifique configuré pour identifier le message de changement d'adresse MAC, et l'identifiant spécifique est un bit d'indicateur de mise à jour placé dans un en-tête de contrôle devant un en-tête de message du message de changement d'adresse MAC;
lorsqu'il est déterminé, en fonction du bit indicateur de mise à jour, que le message de changement d'adresse MAC est reçu, le téléchargement (S402), par le premier port de stacking du premier dispositif, d'une copie du message de changement d'adresse MAC vers une première unité centrale de traitement, CPU, du premier dispositif ; et
la mise à jour (S304, S403), par la première CPU du premier dispositif, d'une liste d'adresses MAC dans une première puce de commutation du premier dispositif en fonction du message de changement d'adresse MAC.

2. Un dispositif de synchronisation d'adresses MAC, adapté pour être placé dans un système de stacking et comprenant un premier port de stacking, une première unité centrale de traitement, CPU, et une première puce de commutation, dans lequel le dispositif de synchronisation d'adresses MAC est configuré pour exécuter le procédé selon la revendication 1.

3. Un système de synchronisation d'adresses MAC, comprenant un premier dispositif selon la revendication 2, et un deuxième dispositif comprenant un deuxième port de stacking, une deuxième puce de commutation et une deuxième unité centrale de traitement ; dans lequel
la deuxième puce de commutation est configurée pour, dans le cas où une adresse MAC du deuxième dispositif est modifiée, envoyer le message de modification de l'adresse MAC au premier port de stacking du premier dispositif et à la deuxième unité centrale du deuxième dispositif ;
dans lequel le message de changement d'adresse MAC porte un identifiant spécifique configuré pour identifier le message de changement d'adresse MAC, et l'identifiant spécifique est un bit d'indicateur de mise à jour placé dans un en-tête de contrôle devant un en-tête de message du message de changement d'adresse MAC.

4. Support de stockage lisible par ordinateur sur lequel sont stockées des instructions exécutables par ordinateur qui, lorsqu'elles sont exécutées par un dispositif synchronisation d'adresses MAC font en sorte que le dispositif de synchronisation d'adresses MAC exécute le procédé selon la revendication 1.
